# EUROPEAN PATENT SPECIFICATION

(11) **EP 2 679 500 B1**
(45) Date of publication and mention of the grant of the patent: **11.04.2018**
(21) Application number: 13167630.6
(22) Date of filing: 14.05.2013
(51) Int. Cl.: B64D 25/00, B64D 13/00, B64D 11/00, B64D 11/06

(54) **Container for an oxygen supply unit, device and system of an arrangement of a number of oxygen supply devices, wherein each oxygen supply untit is stored in a container, method of control of a status and/or change of status of a container**
Behälter für eine Sauerstoffversorgungseinheit, Vorrichtung und System einer Anordnung mehrerer Sauerstoffversorgungsvorrichtungen, wobei jede Sauerstoffversorgungseinheit in einem Behälter gelagert ist, Verfahren zur Steuerung eines Status und/oder eines Statuswechsels eines Behälters
Récipient destiné à une unité d'alimentation en oxygène, dispositif et système d'agencement d'un certain nombre de dispositifs d'alimentation en oxygène, où chaque unité d'alimentation en oxygène est stockée dans un récipient, procédé de commande d'un état et/ou un changement d'état d'un récipient

(30) Priority: 28.06.2012 EP 12174223
(43) Date of publication of application: 01.01.2014
(73) Proprietor: Zodiac Aerotechnics, 78370 Plaisir (FR)
(72) Inventor: Hollm, Marco, 25548 Rosdorf (DE); Weinmann, Hasso, 23564 Lübeck (DE); Boomgaarden, Günter, 23684 Scharbeutz (DE); Niedostatek, Mark, 21279 Wenzendorf (DE); Meckes, Rüdiger, 23919 Berkenthin (DE); Rittner, Wolfgang, 23623 Ahrensbök (DE)
(74) Representative: Cabinet Plasseraud

(56) References cited:
- WO-A1-2010/027822
- GB-A- 2 480 322
- US-A- 3 615 250
- US-A1- 2010 033 325

## Description

The invention relates to a container for an oxygen supply unit having a container well at least wherein a container door can be pivotally joined at a container well's edge (see, for example, US 2010/0033325 A1, corresponding to the preamble of product claim 1). The invention also relates to an oxygen supply device having an oxygen supply unit stored in the container. The invention also relates to a system of an arrangement of a number of oxygen supply devices in a ceiling panel along an aircraft's cabin in particular along an aircraft's cabin row or alley of seats wherein in each device an oxygen supply unit is stored in a container Passenger service units as known in the state of the art are widely used in civil aircraft comprising for instance a reading light, a passenger or crew air or oxygen supply device, oxygen masks, warning lights and the like appliances. In particular an oxygen supply unit usually is part of an oxygen supply device wherein the unit is stored in a container of the aforementioned kind. In some aircrafts one passenger service unit is provided for each seat of a passenger and crew member. In other aircrafts one single passenger service unit is provided for a number of the seats, for instance in a particular for a row of seats. A row usually is aligned crosswise to an alley of seats.

Containers of oxygen supply units of the aforementioned kind usually are arranged adjacent to each other, side by side to allow an arrangement of a number of oxygen supply devices in a ceiling-panel along an aircraft's cabin in particular along an aircraft's cabin alley of seats. Such oxygen supply devices are referred to as OBOGS (on-board-oxygen-generating-systems) and are adapted to temporarily or continuously provide oxygen to a passenger or crew member of an aircraft. Various methods of generating oxygen are known; basically one is adapted for physically generating oxygen gas by means of an oxygen pressure cylinder and another one is adapted for chemically generating oxygen by means of a chemical oxygen generator. Thereby a certain amount of air or continuous air flow comprising a sufficient or high concentration of oxygen can be provided to a passenger or crew member.

US 3,615,250 discloses an oxygen supply system for aircraft passengers in which a solid oxygen-yielding composition is stored in a hermetically sealed container. An electrical ignition system initiates thermal decomposition of the composition and removes a fusable seal from the container. A testing circuit is provided to automatically test the operativeness of the ignition system and the fusable container seal.

In an emergency situation, such emergency oxygen devices in a system of an arrangement of a number of such devices are used to supply oxygen to passengers or crew members of an aircraft; in particular emergency situations can result from a decompression situations or smoke or the like on board of the aircraft. Usually the oxygen masks are stored above the passenger in a ceiling compartment usually in a separate casing, like for instance the above mentioned container. In case of an emergency situation, it is to be guaranteed with sufficient reliability that oxygen masks can be released and fall out of the container. Thus upon a door opening, the oxygen masks then are provided to the passenger at a certain level defined by means to connect the oxygen masks in the dropped state relative to the container, the oxygen generator or any other fixed point above the passenger.

Therefore it is highly desirable to know about the status of the containers to guarantee in advance that the container will work as demanded in an emergency situation. In particular the functioning of the container's door in particular relative to the containers well is of particular interest. The reason is that, in an above mentioned arrangement of containers to form a passenger supply unit in an above mentioned system of an arrangement of a number of oxygen supply devices in a ceiling panel, unavoidable stress or external forces are exerted to the container. Nevertheless, it is to be prevented that stress or forces work detrimental to the functioning of the container for releasing the oxygen masks.

In particular, it is highly desirable to provide a tool for in advance knowing the status of the container with regard to the question whether the container is ready for functioning or not.

Accordingly it is a major object of the invention to provide a container for an oxygen supply unit, wherein the status of the container is known. In particular it is a further object to provide a container wherein the status of the container can be indicated by a signaling. It is still a further object of the invention to provide a container wherein additionally a relation between a container's well and a container's door is construed sufficiently reliable in working ready for an emergency case. In particular a status control of the container should be adapted to exceptions to the rule.

As relates a container, the object is achieved by the invention by the subject matter claimed in claim 1. The concept of the invention also leads to an oxygen supply device as first defined in claim 9 in combination with a system comprising that container. Further, the concept of the invention leads to a system of claim 10 of an arrangement of a number of containers as claimed in one of claims 1 to 8 and/or of an arrangement of a number of oxygen supply devices in a fuselage of an aircraft. The fuselage of an aircraft in particular encloses a cabin's interior and/or a cockpit area. A cabin's interior extends also to a passenger cabin or a freighter cabin. In particular the arrangement can be provided in a ceiling panel along an aircraft's cabin wherein in each oxygen supply device, an oxygen supply unit is stored in a container. In particular the container is defined according to the invention as claimed in one of claims 1 to 8. The concept of the invention also leads to a method of monitoring according to claim 12. The invention starts from the consideration that for a correct functioning of a container the status of the door in particular relative to the well of the container is highly desirable. Further the invention has considered that the status can be monitored and the monitoring is sufficient to indicate exceptional malfunction of the container. Further the invention has recognized that monitoring of a container status well fits into usual test procedures for supervising a correct functioning of a container in advance of an emergency situation. As a resultᵢ the invention provides for a container having a container well at least, wherein a container door can be pivotally joined at a container well's edge and wherein the container is provided with a sensor system adapted to indicate a status and/or change of status of the door, in particular relative to the well.

The invention can advantageously be implemented by means of particular easy and energy saving sensoring tools. In particular, the invention advantageously uses existing electronic periphery. It has been recognized that a sensor system as provided can be adapted to the existing electronic periphery for further providing a signaling connection to the system of an arrangement of a number of oxygen supply devices for signaling monitoring signals of a container.

These and further developed configurations of the invention are further outlined in the dependent claims. Thereby the mentioned advantages of the proposed concept are even more improved. In a particular preferred embodiment, the container door is pivotable about a hinge at the container well's edge. The hinge is preferably adapted to already provide secure functioning of the container, namely undisturbed opening of the container's door in an emergency situation, even upon stress, force or other loads exerted to the container. Preferably, the sensor system is provided fully on the door. This has some particular advantages, at first, the door is the critical security-relevant component of the container and a sensor system provided fully on the door is well-placed to monitor the functioning of the door in an opening state or during process of opening. Also the sensor system can be placed reliably and independent of the oxygen supply unit in the container well; thus, influence or effects on the oxygen supply unit are avoided when providing the sensor system fully on the door.

In a particular preferred development, it turned out that powering of the sensor system can advantageously be provided by placing the sensor system fully on the door. It turned out that in particular energy harvesting means can be used for powering the sensor system on the door. The development recognized that once the door is in the moving state the motion of the door can be used for energy harvesting and for powering the sensor system. As the monitoring concept of the invention is adapted to avoid superfluous signaling, an energy harvesting system can advantageously be adapted to provide energy only in the case of a malfunction of the door. A malfunction of the door however, advantageously can be discovered during a test of functionality check wherein the door is moved or undergoes some motion at least. Kinetic energy from such or other kind of motion of the door can be used for powering the sensor system to monitor the status of the door. According to the invention as defined in claim 1, the sensor system is adapted for discriminating between a partial or complete opening of the door The development advantageously recognizes that merely a logic YES or NO is not sufficient in most emergency systems of an aircraft. A particular reason for this is that the door functioning once in a while undergoes a test or check position which has to be distinguished from a malfunction. On the other hand, a malfunction in an emergency situation is established by a closed door and a partial opened door. However, in an all-day situation without emergency the correct function of the door is the closed state - nevertheless the closed state shall not lead to superfluous monitoring signals. As a preferred development the sensor system is adapted to signal in particular only firstly either a partial and static opening of the door and, in particular only secondly a complete dynamically opening of the door. A static partial opening of the door is to be understood as a status of the door wherein the relative position of door and well remains the same for a sufficiently long span of time. Usually, the amount of opening, namely the opening angle of a pivotable door, can remain to be of a small but fixed amount. The aforementioned condition usually is indicative of a test situation. Thus, one or an accumulation of the aforementioned conditions can be advantageously used to indicate a test status of the container.

A complete dynamic opening procedure of the door is to be understood as the opening to a wide angle, in particular above 45°, and/or a dynamic status like e.g. a swinging status of the status of the door namely an amendment of angle position in a kind of transient behaviour along a time axis which is an actual state of motion or at least has happened. These or other conditions usually indicate an emergency opening or swinging of the door. A respective signaling to a system of an arrangement of a number of oxygen supply devices can be such that those containers are indicated which --in an emergency situation-- do not have the dynamic complete opening status of the door. Also here, a superfluous signaling is avoided and clearly indicates only the malfunctioning containers, i.e. those which did not open completely, rather than the correct working functioning containers. According to the invention as defined in claim 1, the sensor system comprises an opening switch adapted to sense any opening of the door, wherein the opening switch is adapted to sense any gap between the door and the well. Thus even a loosened door with a small amount of opening angle relative to the well will be sensed by the opening switch. For instance, the opening switch can be a contact switch, a light indicating switch or the like. The switch can technically be based on an electrical principle or based on another technical principle. A preferred embodiment of a contact switch is e.g. a REED contact switch or the like contact. In particular any kind of scanner or probe is also suitable. Preferred is for instance a light barrier-based sensor or the like. Generally a contact or opening switch can be based on mechanical, optical, magnetic or electromagnetic or electrical technology. Also any other kind of mechanical switch can be used. Still according to the invention as defined in claim 1, the sensor system comprises a motion sensor adapted to sense the movement of the door, in particular relative to the well and/or a location or position sensor. These and other kinds of sensors are particular adapted to sense a movement of the door, in particular relative to the well. In particular, it is preferred to sense a motion of the door in the process of movement of the door. Particular preferred is a motion sensor formed as an acceleration sensor in particular a three-axis acceleration sensor also known as a g-sensor or the like.

Particular preferred is a combination of the sensor system in particular an acceleration sensor, with an energy harvesting means. Thus, powering of the sensor system, in particular a motion sensor, can be preferably provided by energy harvesting in the status of movement. Such kind of energy harvesting means / device can be provided in form of a solar cell.

In particular a solar cell panel can advantageously be fixed to the outside surface of the door. It has been shown that a solar cell is well suited to work as a harvesting device. By taking advantage even from residue light at limited light levels in an aircraft's cabin --like e.g. from a reading light incident light from outside as far as available, dimmed light etc.-still, a solar cell panel on the downside outer surface of a container as fixed in a position in a row of containers along a cabin's ceiling-panel, in particular along an aircraft's cabin alley of seats, will generally provide sufficient power to allow for self-sufficient functioning of the above mentioned sensors and/or even an oxygen supply device having an oxygen supply unit stored in the container.

Particular preferred is a solar cell in form of a solar cell panel; particular advantageous is a cut solar cell panel foil; thus having sufficient energy conversion efficiency to provide for sufficient power even from residue light. A cut solar cell panel foil can be processed and be adapted to the size of the container door in a particular advantageous manner. Also a flat foil can be assembled and blended with a door blend or cover surface to allow for an aesthetic sight to the container's door downward outer surface facing when the container is in its fixed position within the row of containers.

It is to be understood that - if within the scope of the invention, which is defined by the appended claim - the above mentioned preferred developments of sensors to the sensor system are not restricting, but generally any kind or combination of sensors in addition to the sensors and combinations of sensors mentioned above or in alternative suitable to indicate for instance a location position and/or orientation of the door, in particular relative to the well, can be envisaged. However, also sensor means can be provided which are able to indicate a change of status of the door independent of the well; these kind of sensor hereinafter is referred to as a status sensor. Thus an absolute change of status of the door may also be of particular interest for monitoring the status of the door. A change of status of the door relative to the well is of particular interest for increasing the reliability of the signaling and to avoid superfluous or erroneous signaling with regard to the status of the door in advance of an emergency situation.

In a particular preferred development the sensor system is adapted to sense any status and/or status change of the door in a region distant from the pivotable joint upon pivoting the door. Preferably a status sensor is provided on or near a pivotable joint. Preferably a status sensor is provided in a region distant from the pivotable joint. Of course position, location and/or orientation sensors --for instance an angle sensor or a revolution counter or the like-- can advantageously be provided in the pivotable or near the pivotable joint. However, in the preferred development, it turned out that advantageously the amount of change of the door is increased relative to the pivotable joint in a region distant from the pivotable joint. Thus, signaling of the status of the container can be made more reliable when taken in a region distant from the pivotable joint upon pivoting the door. According to the invention as defined in claim 1, the sensor system comprises a motion sensor and an opening switch such that discriminating of a partial or complete opening of the door is established. In a preferred first status --also referred to as a test or check status-- a partial opening is indicated in the case the opening switch is in a responding state of indicating an opening of the door. The motion sensor is in a non-responding state. A status sensor is indicative of a partial opening. Thus in the test or check status, the door is open however not moving according to a first variant of this development and/or not fully open according to a second variant of this development. A test position of the door in a test or check status preferably is fixed and/or at rest on a latch, bolt or the like door stopper. E.g. an angle sensor indicates an angle of opening below 30° or below 40°. ln a second status --also referred to as an emergency status-- a complete opening of the door is indicated in the case the opening switch is in a responding state of indicating an opening of the door. The motion sensor is in a responding state of indicating a door motion. A status sensor is indicative of a complete opening; e.g. an angle sensor indicates an angle of opening exceeding 30° or exceeding 40°

In the emergency status all containers can be indicated which are wide open with a somewhat moving or swinging door As described above, most preferably for avoiding superfluous signaling, the aforementioned second status can be inverted in the signaling. Preferably only the malfunctioning containers are signalized. A signal of the inverted second status can be such that a complete opening of the door is detected but not indicated and/or not signalized in the case the opening switch is in a responding state and the motion sensor is detected to be in a responding state of indicating a door motion. A signaling, however is given if an emergency situation is present and known in a system and, additionally, a complete opening of the door signal is missing.

These and other developments are of particular advantage in view of an increased stability and improved form of the container. Particular preferred is a container as further claimed in the dependent claims. Preferably, the container well at least consists of a sheet-molded material. In particular, the container well's edge is integrally molded with a container well and/or a container door's edge is integrally molded with the container door.

Thus, stability of the door and the well is particular increased and allows even respective support of the container at the container well's edge.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made if not thereby departing from the scope of the invention as defined by the appended claims. The wording "comprising" does not exclude other elements or steps. The wording "a" or "an" does not exclude a plurality. The wording "a number of" items, comprises also the number one, i.e. a single item, and further numbers like two, three, four and so forth.

The drawing shows in:
Fig. 1: an embodiment of a container for an oxygen supply unit of sheet-molded material in view (A) and a system shown in view (B);
Fig. 2: a particular preferred embodiment of a container of the kind as shown in Fig. 1 with a sensor system on a door, adapted for discriminating between a partial or complete opening of the door;
Fig. 3: a particular preferred embodiment of a container of the kind as shown in Fig. 1 and/or Fig. 2 with an energy harvesting device in form of a solar cell on the outised surface of the door;
Fig. 4: a flow chart of a preferred embodiment of a method for discriminating between a partial or complete opening of the door in particular by making use of the sensor system on a door as shown in Fig. 2.

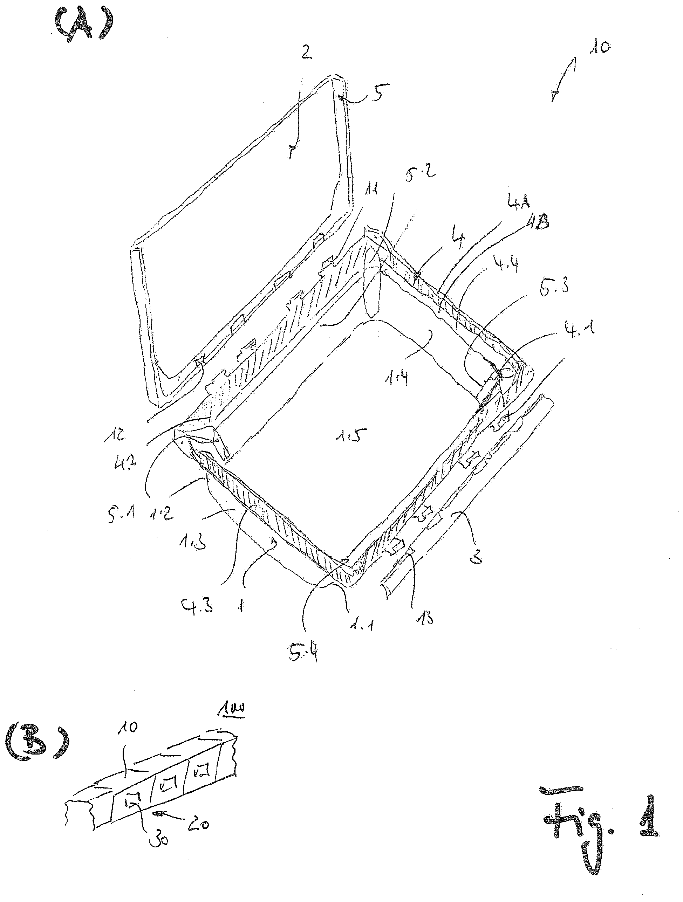

Fig. 1 shows in view (A) a container 10 for an oxygen supply unit as shown in the system 20 of view (B) in Fig. 1. In the system 20 an oxygen supply device having an oxygen supply unit 30 and the container 10 of Fig. 1 is provided. The oxygen supply unit 30 can be an oxygen pressure cylinder or a chemical oxygen generator. Also the oxygen supply unit 30 can be a chemical oxygen container combined with an oxygen pressure buffer and a downstream connected electronic or mechanical flow regulator.

The container 10 of view (A) in Fig. 1 has a container well 1 and a container door 2 and a hinge profile 3 which on the one hand is adapted to keep the door on top of the well during usual flight conditions and on the other hand for safe opening during hazardous situations when needed. Also the hinge profile 3 is adapted for assembling the container 10 into an arrangement 100 of a number of containers for a ceiling-panel along an aircraft's cabin. Thus the arrangement 100 of containers is for providing an arrangement of a number of oxygen supply devices like the one shown schematically as system 20 in view (B) of Fig. 1 along an aircraft's cabin alley of seats. As shown by the hinge bar 11 --for cooperation with hinge openings 12 and hinge openings 13 in the hinge profile 3-- the container door 2 is pivotably joint at a container well's edge 4. As recognized in the present invention, the containers well's edge 4 establishes not only sufficient stability to the container well 1 of Fig. 1 as such and thus to the container 10, but also to an arrangement 100 of containers of view (B) of Fig. 1 even when subjected to considerable stress and pressure load along an aircraft cabin's elongate axis above an alley of seats. Thus the edge 4 functions as a stabilising frame for the container 10 as such. Also the edge is a load deducting element upon arrangement of the container 10 in the arrangement 100 in view (B) of Fig. 1.

In the present embodiment the container well 1 with the container well's edge 4 the container door 2 with the container door's edge 5 and the hinge profile 3 consists of a sheet-molded material. For increasing mechanical strength of the container well 1 and container door 2 both edges namely container well's edge 4 and container door's edge 5 are integrally molded with the body of the container well and the container door respectively The container well in particular has a front rear and side container wall 1.1, 1.2, 1.3, 1.4 and a floor 1.5 respectively. In the present embodiment a front edge 4.1 rear edge 4.2 and side edges 4.3, 4.4 are formed by integrally molding the edges 4.1, 4.2, 4.3, 4.4 with the container well walls. Thus this results in a very high stable version of the container well 1. In particular, on all the aforementioned sides the container edge 4 has an outer edge portion 4A extending crosswise from the walls and an inner edge portion 4B which smoothly extends from the outer edge portion 4A into the wall 1.1, 1.2, 1.3, 1.4 respectively. Thus also this construction increases static stability of the container. Moreover this construction is adapted to be easily produced within a thermoforming assisted deep-drawing molding process for the sheet-molded material. Also in the present embodiment in the transition regions 5.1, 5.2, 5.3, 5.4 between the walls 1.1, 1.2, 1.3, 1.4 depression regions are provided to further increase the static stability. Thereby as such stable and also in an arrangement 100 a container 10 with high stress resistance is provided by the present invention and as described in the aforementioned embodiment. In particular opening of the container door 2 is guaranteed even upon mechanical load or a hazardous impact on the container 10.

It is additionally desirable to have some kind of signaling and/or monitoring signal from a container for an oxygen supply unit. This has several reasons. At first of course, in an emergency situation it is desirable to have a clear indication --for instance by a light warning signal at the container's location-- that the container is not working. Additionally, however, it is --possibly even more-- important to know in advance of an emergency situation about a critical working status of the container. This can be afforded by way of continuous monitoring of the container and testing reliable working of the container during tests.

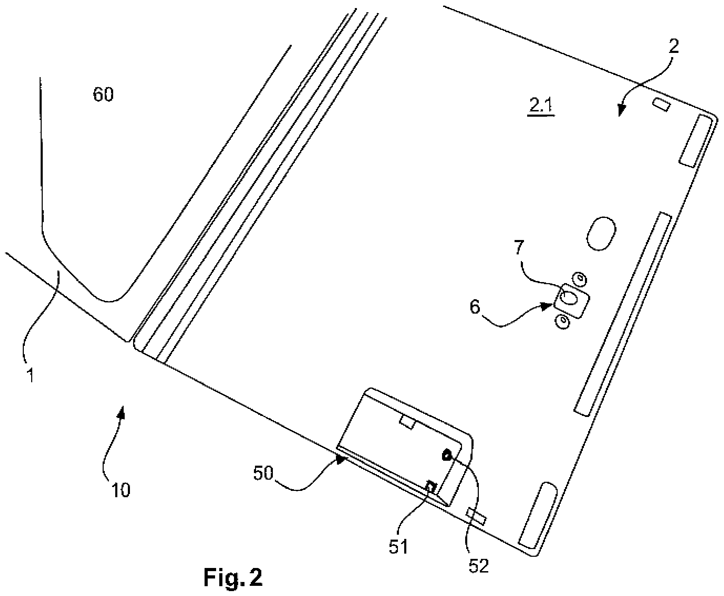

The embodiment shown in Fig. 2 provides a container of the aforementioned kind with a container door pivotably joinable at a container well's edge wherein the container is provided with a sensor system adapted to indicate a change of status of the door. The container 10 is shown in a cut-out view with the well 1 and the door 2 showing the door's 2 inside surface 2.1. The door on its inside surface 2.1 has a locking claw 6 provided with a damping element 7 which allows damped closing and opening of the door 2. Thus, test openings of the door do not functionally affect the door, and/or the well. In the well, particular in the well's floor 1.5 a trough or the like flat dimple is provided, in particular with a not shown recession or opening, to put through a signaling means. In the trough or dimple an electrical means is provided to collect and process sensoring signals. The electrical means like for instance a printed circuit board or the like forms a node to a network wherein --by means of the network-- signals of all containers in the cabins are available. The printed circuit board can be connected to a sensor system 50 of the container either by means of a physical connection and signaling line or by an air interface between the sensor system 50 and the electrical means in the dimple. Thus all sensoring signals of the sensor means 50 will be processable by the electrical means in the well and further are available to a network in an aircraft's cabin.

The sensor system 50 is provided with an opening switch 51 and a motion sensor 52. In the instant embodiment the opening switch is formed as a photo cell which senses the difference between dark and light surrounding conditions. Thus any --even a small-- gap of opening of the door is sensed by the photocell. However usually --if not combined with a distance measurement unit-- the photocell of the opening switch 51 will not be able to sense the amount of opening of the door 2 relative to the well.

In addition, a three-axis acceleration sensor is provided as a motion sensor 52. The three-axis acceleration sensor is able to sense a moving status of the door. Thus, in the case the opening switch 51 and the motion sensor 52 both deliver a signaling of a positive response (i.e. some opening and some movement) the combination of the signaling can be used to conclude for a complete opening of the door. However in the case the motion sensor 52 delivers a non-responding signal whereas the opening switch 51 delivers a responding signal (i.e. some opening without movement) the combination of both signaling can be used to conclude that the door is only partially opened.

The farther situation can be indicated as a malfunction of the container during all-day use (wherein the correct status would be to have a closed container) and during an emergency situation (wherein an opened container is correct) a respective signaling can be suppressed to avoid superfluous signaling in the aircraft cabin's net.

The latter signaling usually is indicative of a test position of the container's door relative to the well. Thus the latter signaling can be used in a test situation to be indicated as a correct functioning of the container wherein absence of the signaling or deviating signaling in a test situation should be also indicated as a malfunctioning container. Also during all-day situation (wherein a closed container is correct) a partially opened container should be indicated as a malfunction of the container.

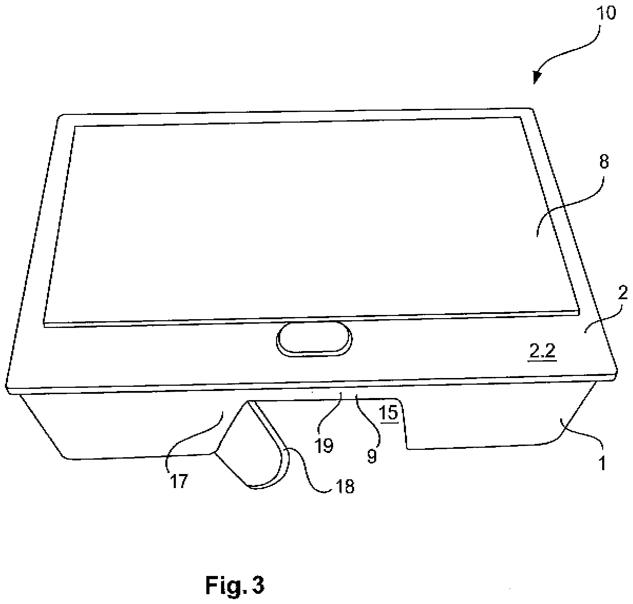

The container 10 of Fig. 3 has a container well 1 and a container door 2 wherein the container's 10 form and constitution is similar to the container shown in Fig.1 and Fig. 2; thus the description of the container 10 in Fig. 1 and Fig. 2 also applies to the container 10 of Fig. 3. For simplicity the same reference marks are shown with the container 10; nevertheless the containers of Fig. 1, Fig. 2 and Fig. 3 respectively may provide differences and adaptations. Here in Fig. 3 the container 10 is shown without any blends; thus the appearance of facing and colour of the container 10 of Fig. 3 may be different when in an operation position in a row of containers in a ceiling panel.

In Fig. 3 the container 10 additionally has a cut solar cell panel foil 8 adapted for conversion of residue light to electrical energy attached on the door's 2 outside surface 2.2. The cut size of the panel foil 8 is adapted to the door's 2 margins size. The solar cell's electrical outputs are connected together to an energy harvesting unit 9 which provides a battery a storage capacitor like a super cap or the like electrical energy storage device. The connection here provides cable means 18 and a connector 17. Thus the system of the solar cell panel foil 8 and the energy harvesting unit 9 provides an energy harvesting device for powering at least the sensor system 50, i.e. at least for powering the opening switch 51 and a motion sensor 52 in a self-sustaining manner. This means sufficient powering is guaranteed in a testing situation and/or emergency situation at least.

The energy harvesting unit 9 as shown here is provided in an outer recess 15 of the container well 1 just beneath the container door 2 --respectively (in an operation position of the container 10 as part of a raw of containers on a ceiling panel) above the container door 2).

The harvesting unit 9 also provides for a, preferably, wireless transmitter and control unit 19 for, preferably, wireless control of the energy harvesting unit 9. Also an activation control and safe radio control can be implemented therewith.

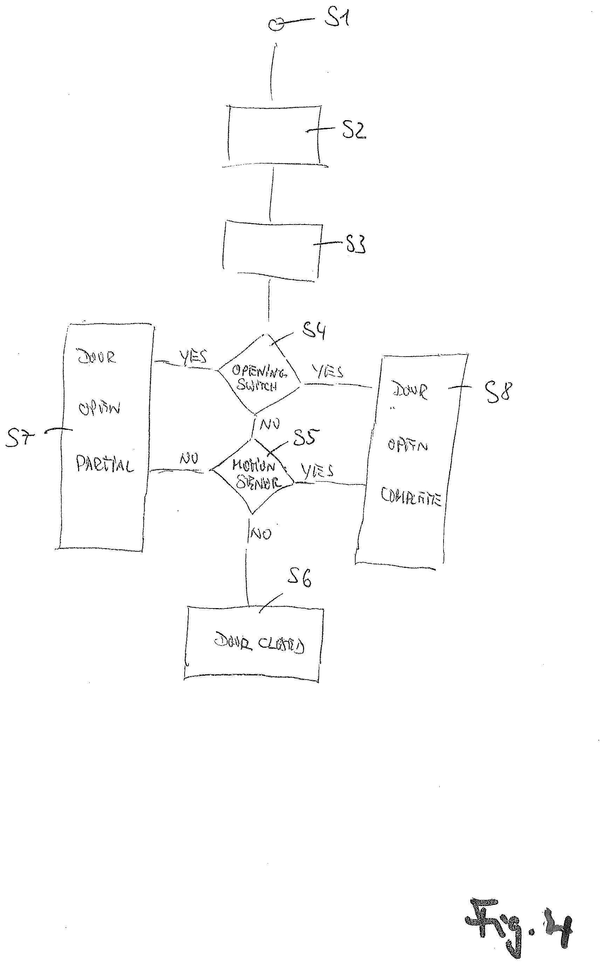

The cable means 18 and connector 17 and harvesting unit 9 and wireless transmitter and control unit 19 can be covered in the recess 15 with a blend (not shown) of the container well 1. Also the cut solar cell panel foil 8 can be put in a suitable frame and light transparent cover which allows for both a secure fitting to the door 2 and an aesthetic face (not shown) when in operation, general method for monitoring a container of the aforementioned kind --as shown in Fig.1 and Fig.2-- is depicted in a flowchart of Fig. 4. The flowchart holds for both a test procedure as well as an emergency procedure of use of the container. The flowchart is restricted to indicate the sensing signals of the container. However the conclusions drawn therefrom depend on the situation --namely a test situation or emergency situation or an all-day use-- the container is in. These and other conclusions can be processed in an application layer for instance provided in the printed circuit board in the container well's dimple, as outlined above. Additionally or alternatively, a further evaluation --for instance a statistical evaluation of malfunctions or the like-- can be provided in the aircraft cabin's net. Thus, in advance statistical evaluations for a long- term use of the container can be used to indicate risky containers. E.g. in the case when the statistics reveal that a certain container at a certain position in the aircraft's cabin has a number of malfunctioning incidents exceeding a certain threshold such container can be exchanged by a new one.

In detail in Fig 4 in step S1 a powering of the container --i.e. the electronics thereof, namely the printed circuit board and the sensor system-- is established to make sure that all electrical components of the container have sufficient power. In step S2 an initialization of the container electronics and sensor system is provided in form of a functionality check as such of the sensors used. Thus, after step S2, in a test procedure one can be sure that the electronics and sensors of a container 10 are working correctly. In step S3, an indication of status of the aircraft cabin is provided namely either a usual operation status, an emergency status or a test status. In step S4 the status of the opening switch 51 is recalled. In step S5, the status of the motion sensor 52 is recalled.

Given the case that none of both --the switch 51 or the sensor 52-- responds, it is concluded in step S6 that the door 2 of the container 10 relative to the well 1 is closed.

In the case the opening switch 51 is in a responding state and the motion sensor 52 is in a non-responding state, it can be concluded in step S7 that the door is partially open as described above. In step S8, a complete opening of the door can be signalized in the case the opening switch 51 and the motion sensor 52 are in a responding state. The accumulation of YES or NO signaling, as indicated in the branches from steps S4 and S5 to steps S7, S8, S6, can be provided in an electronic circuit board or the like electronics 60 e.g. placed in a dimple or trough or the like, in the floor 1.5 of the container's well 1.

The statistics and/or in advance warnings for a container's malfunction can be centrally processed in a cabin's network processor or the like.

## Claims

1. Container (10) for an oxygen supply unit in a fuselage of an aircraft in a ceiling-panel along an aircraft's cabin, having a container well (1) at least, wherein a container door (2) can be pivotably joint at a container well's edge (4), wherein the container is provided with a sensor system (50), adapted to indicate a status and/or change of status of the door, **characterised in that** the sensor system comprises a motion sensor (52) and a status sensor in addition to an opening switch (51) such that for discriminating between a partial or complete opening of the door
- a partial opening is indicated in the case the opening switch is in a responding state of indicating an opening of the door, and additionally the motion sensor is in a non-responding state and/or the status sensor is indicative of a partial opening
- a complete opening of the door is indicated in the case the opening switch is in a responding state and additionally the motion sensor is in a responding state of indicating a door motion and/or the status sensor is indicative of a complete opening.

2. Container (10) of claim 1 wherein the container door (2) is pivotable about a hinge (3) at the container well's edge (4) and the sensor system (50) is provided fully on the door and the sensor system is adapted to sense any status and/or change of status of the door in a region distant from the pivotable joint upon pivoting the door.

3. Container (10) of claim 1 or 2 wherein the sensor system is adapted for discriminating between a partial and static or complete and dynamic opening of the door, wherein the opening switch (51) comprised in said sensor system is adapted to sense any opening of the door, wherein the opening switch is adapted to sense any gap between the door and the well, and the sensor system comprises a motion sensor adapted to sense a movement of the door.

4. Container (10) according to claim 3 wherein the motion sensor (52) is formed as an acceleration sensor.

5. Container (10) according to one of claims 1 to 4 wherein the status and/or change of status is relative to the well (1).

6. Container (10) according to one of the preceding claims wherein an energy harvesting system/device is adapted to use a motion of the container door for energy harvesting and for powering the sensor system.

7. Container (10) of claim 6 wherein the energy harvesting device comprises a solar cell panel attached to the outside of the door in combination with a harvesting unit (9) attached to the outside of the well (1).

8. Container (10) of one of the preceding claims wherein the container well (1) at least consists of a sheet molded material, wherein the container well's edge (4) is integrally molded with the container well and/or a container door's edge (5) is integrally molded with the container door, wherein the container well and/or the container wall is molded from the material by a deep-drawing molding, compression molding and/or injection molding.

9. System (20) comprising a container (10) according to one of the preceding claims and an oxygen supply device having an oxygen supply unit (30) stored in said container, wherein the oxygen supply unit has a oxygen pressure cylinder and/or a chemical oxygen generator.

10. System (100) comprising a number of containers (10) according to one of claims 1 to 8 and/or a number of oxygen supply devices having an oxygen supply unit, in a fuselage of an aircraft, in a ceiling-panel along an aircraft's cabin, wherein each oxygen supply unit is stored in one of said containers.

11. System (100) as claimed in claim 10 wherein a signaling connection by line and/or air interface is provided to the container (10) to indicate a change of status of the door relative to the well (1), wherein the containers are arranged for respective support at the containers well's edge (4).

12. Method of monitoring of a change of status of a container (10) of one of the claims 1 to 10, wherein the status of the door (2) is monitored, and wherein a partial or complete opening of the door is discriminated by a sensor system (50), wherein the sensor system comprises a motion sensor (52) and a status sensor in addition to an opening switch (51), wherein for discriminating:
- a partial opening is indicated in the case the opening switch is in a responding state of indicating an opening of the door, and the motion sensor is in a non-responding state and/or the status sensor is indicative of a partial opening; and/or
- a complete opening of the door is indicated in the case the opening switch is in a responding state and the motion sensor is in a responding state of indicating a door motion and/or the status sensor is indicative of a complete opening.

## Patentansprüche

1. Behälter (10) für eine Sauerstoffversorgungseinheit in einem Rumpf eines Luftfahrzeugs in einem Deckenpaneel entlang einer Luftfahrzeugkabine, welcher zumindest eine Behältersenke (1) aufweist, wobei eine Behältertür (2) an einem Rand (4) der Behältersenke schwenkbar verbunden sein kann, wobei der Behälter mit einem Sensorsystem (50) bereitgestellt ist, welches eingerichtet ist, um einen Zustand und/oder eine Zustandsänderung der Tür anzuzeigen, **dadurch gekennzeichnet, dass** das Sensorsystem einen Bewegungssensor (52) und einen Zustandssensor zusätzlich zu einem Öffnungsschalter (51) aufweist, sodass zum Unterscheiden zwischen einem partiellen oder vollständigen Öffnen der Tür
- ein partielles Öffnen in dem Fall angezeigt wird, in welchem sich der Öffnungsschalter in einem Antwort-Zustand des Anzeigens eines Öffnens der Tür befindet und zusätzlich sich der Bewegungssensor in einem Nicht-Antwort-Zustand befindet und/oder der Zustandssensor ein partielles Öffnen anzeigt
- ein vollständiges Öffnen der Tür in dem Fall angezeigt wird, in welchem sich der Öffnungsschalter in einem Antwort-Zustand befindet und zusätzlich sich der Bewegungssensor in einem Antwort-Zustand des Anzeigens einer Türbewegung befindet und/oder der Zustandssensor ein vollständiges Öffnen anzeigt.

2. Behälter (10) gemäß Anspruch 1, wobei die Behältertür (2) um ein Scharnier (3) an dem Rand (4) der Behältersenke schwenkbar ist und das Sensorsystem (50) vollständig an der Tür bereitgestellt ist und das Sensorsystem eingerichtet ist, um irgendeinen Zustand und/oder Zustandsänderung der Tür beim Schwenken der Tür in einem Bereich zu erfassen, welcher von der Schwenkverbindung entfernt ist.

3. Behälter (10) gemäß Anspruch 1 oder 2, wobei das Sensorsystem eingerichtet ist zum Unterscheiden zwischen einem partiellen und statischen oder einem vollständigen und dynamischen Öffnen der Tür, wobei der Öffnungsschalter (51), welcher in besagtem Sensorsystem enthalten ist, eingerichtet ist, um irgendein Öffnen der Tür zu erfassen, wobei der Öffnungsschalter eingerichtet ist, um irgendeinen Spalt zwischen der Tür und der Senke zu erfassen, und das Sensorsystem einen Bewegungssensor aufweist, welcher eingerichtet ist, um eine Bewegung einer Tür zu erfassen.

4. Behälter (10) gemäß Anspruch 3, wobei der Bewegungssensor (52) als ein Beschleunigungssensor ausgebildet ist.

5. Behälter (10) gemäß irgendeinem der Ansprüche 1 bis 4, wobei der Zustand und/oder die Zustandsänderung relativ zur Senke (1) ist.

6. Behälter (10) gemäß irgendeinem der vorhergehenden Ansprüche, wobei ein Energieerntesystem / eine Energieerntevorrichtung eingerichtet ist, um eine Bewegung der Behältertür zum Energieernten und zum Betreiben des Sensorsystems zu verwenden.

7. Behälter (10) gemäß Anspruch 6, wobei die Energieerntevorrichtung ein Solarzellenpaneel, welches an der Außenseite der Tür angebracht ist, in Kombination mit einer Ernteeinheit (9) aufweist, welche an der Außenseite der Senke (1) angebracht ist.

8. Behälter (10) gemäß irgendeinem der vorhergehenden Ansprüche, wobei die Behältersenke (1) zumindest aus einem platten-geformten Material besteht, wobei der Rand (4) der Behältersenke mit der Behältersenke einstückig geformt ist und/oder ein Rand (5) der Behältertür mit der Behältertür einstückig geformt ist, wobei die Behältersenke und/oder die Behälterwand aus dem Material durch ein Tiefziehformen, ein Pressformen und/oder ein Spritzformen geformt ist.

9. System (20), welches einen Behälter (10) gemäß irgendeinem der vorhergehenden Ansprüche und eine Sauerstoffversorgungsvorrichtung aufweist, welche eine Sauerstoffversorgungseinheit (30) in besagtem Behälter untergebracht hat, wobei die Sauerstoffversorgungseinheit einen Sauerstoffdruckzylinder und/oder einen chemischen Sauerstoffgenerator aufweist.

10. System (100), welches eine Anzahl von Behältern (10) gemäß irgendeinem der Ansprüche 1 bis 8 und/oder eine Anzahl von Sauerstoffversorgungsvorrichtungen, die eine Sauerstoffversorgungseinheit aufweisen, in einem Rumpf eines Luftfahrzeugs in einem Deckenpaneel entlang einer Luftfahrzeugkabine aufweist, wobei jede Sauerstoffversorgungseinheit in einem der besagten Behälter untergebracht ist.

11. System (100) wie in Anspruch 10 beansprucht, wobei eine Signalverbindung durch eine Leitung und/oder eine Luftschnittstelle für den Behälter (10) bereitgestellt ist, um eine Zustandsänderung der Tür relativ zur Senke (1) anzuzeigen, wobei die Behälter angeordnet sind zum jeweiligen Stützen am Rand (4) der Behältersenke.

12. Verfahren des Überwachens einer Zustandsänderung eines Behälters (10) gemäß irgendeinem der Ansprüche 1 bis 10, wobei der Zustand der Tür (2) überwacht wird und wobei ein partielles oder vollständiges Öffnen der Tür durch ein Sensorsystem (50) unterschieden wird, wobei das Sensorsystem einen Bewegungssensor (52) und einen Zustandssensor zusätzlich zu einem Öffnungsschalter (51) aufweist, wobei zum Unterscheiden:
- ein partielles Öffnen in dem Fall angezeigt wird, in welchem sich der Öffnungsschalter in einem Antwort-Zustand des Anzeigens eines Öffnens der Tür befindet und sich der Bewegungssensor in einem Nicht-Antwort-Zustand befindet und/oder der Zustandssensor ein partielles Öffnen anzeigt, und/oder
- ein vollständiges Öffnen der Tür in dem Fall angezeigt wird, in welchem sich der Öffnungsschalter in einem Antwort-Zustand befindet und sich der Bewegungssensor in einem Antwort-Zustand des Anzeigens einer Türbewegung befindet und/oder der Zustandssensor ein vollständiges Öffnen anzeigt.

## Revendications

1. Contenant (10) pour une unité d'alimentation en oxygène dans un fuselage d'un aéronef dans un panneau de plafond le long d'une cabine d'un aéronef, possédant une cavité de contenant (1) au moins, dans lequel une porte de contenant (2) peut être jointe de façon pivotante, à un bord (4) de la cavité de contenant, dans lequel le contenant est pourvu d'un système à capteur (50) adapté pour indiquer un état et/ou changement d'état de la porte, **caractérisé en ce que**
le système à capteur comprend un capteur de mouvement (52) et un capteur d'état en plus d'un commutateur d'ouverture (51) tels que pour distinguer entre une ouverture partielle ou complète de la porte,
- une ouverture partielle est indiquée au cas où le commutateur d'ouverture est dans un état répondant, de l'indication d'une ouverture de la porte, et de plus le capteur de mouvement est dans un état non répondant et/ou le capteur d'état est indicatif d'une ouverture partielle,
- une ouverture complète de la porte est indiquée au cas où le commutateur d'ouverture est dans un état répondant et de plus le capteur de mouvement est dans un état répondant de l'indication d'un mouvement de porte et/ou le capteur d'état est indicatif d'une ouverture complète.

2. Contenant (10) selon la revendication 1, dans lequel la porte de contenant (2) peut pivoter autour d'une charnière (3) au bord (4) de la cavité de contenant et le système à capteur (50) est prévu entièrement sur la porte et le système à capteur est adapté pour détecter un quelconque état et/ou changement d'état de la porte dans une région distante du joint pouvant pivoter lors du pivotement de la porte.

3. Contenant (10) selon la revendication 1 ou 2, dans lequel le système à capteur est adapté pour distinguer entre une ouverture partielle et statique ou complète et dynamique de la porte, dans lequel le commutateur d'ouverture (51) compris dans ledit système à capteur est adapté pour détecter une quelconque ouverture de la porte, dans lequel le commutateur d'ouverture est adapté pour détecter un quelconque écart entre la porte et la cavité, et le système à capteur comprend un capteur de mouvement adapté pour détecter un mouvement de la porte.

4. Contenant (10) selon la revendication 3, dans lequel le capteur de mouvement (52) est sous forme de capteur d'accélération.

5. Contenant (10) selon l'une des revendications 1 à 4, dans lequel l'état et/ou changement d'état est relatif à la cavité (1).

6. Contenant (10) selon l'une des revendications précédentes, dans lequel un dispositif à récupérateur d'énergie est adapté pour utiliser un mouvement de la porte de contenant pour la récupération d'énergie et pour l'alimentation du système à capteur.

7. Contenant (10) selon la revendication 6, dans lequel le dispositif à récupérateur d'énergie comprend un panneau à cellules solaires fixé à l'extérieur de la porte en association avec une unité de récupération (9) fixée à l'extérieur de la cavité (1).

8. Contenant (10) selon l'une des revendications précédentes dans lequel la cavité de contenant (1) est au moins constituée d'un matériau moulé en feuille, dans lequel le bord (4) de la cavité de contenant est moulé de façon monobloc avec la cavité de contenant et/ou un bord (5) de la porte de contenant est moulé de façon monobloc avec la porte de contenant, dans lequel la cavité de contenant et/ou la paroi de contenant est moulée à partir du matériau par l'intermédiaire d'un moulage par emboutissage profond, d'un moulage par compression et/ou d'un moulage par injection.

9. Système (20) comprenant un contenant (10) selon l'une des revendications précédentes et un dispositif d'alimentation en oxygène possédant une unité d'alimentation en oxygène (30) stockée dans ledit contenant, dans lequel l'unité d'alimentation en oxygène possède une bouteille à oxygène sous pression et/ou un générateur d'oxygène chimique.

10. Système (100), comprenant un nombre de contenants (10) selon l'une des revendications 1 à 8 et/ou un nombre de dispositifs d'alimentation en oxygène possédant une unité d'alimentation en oxygène, dans un fuselage d'un aéronef, dans un panneau de plafond le long d'une cabine d'un aéronef, dans lequel chaque unité d'alimentation en oxygène est stockée dans l'un desdits contenants.

11. Système (100) selon la revendication 10, dans lequel une connexion de signalisation par interface de ligne et/ou radio est prévue sur le contenant (10) pour indiquer un changement d'état de la porte relatif à la cavité (1), dans lequel les contenants sont agencés pour le support respectif au bord (4) de la cavité des contenants.

12. Procédé de surveillance d'un changement d'état d'un contenant (10) selon l'une des revendications 1 à 10, dans lequel l'état de la porte (2) est surveillé, et dans lequel une ouverture partielle ou complète de la porte est distinguée par un système à capteur (50), dans lequel le système à capteur comprend un capteur de mouvement (52) et un capteur d'état en plus d'un commutateur d'ouverture (51), dans lequel, pour la distinction :
- une ouverture partielle est indiquée au cas où le commutateur d'ouverture est dans un état répondant, de l'indication d'une ouverture de la porte, et le capteur de mouvement est dans un état non répondant et/ou le capteur d'état est indicatif d'une ouverture partielle ; et/ou
- une ouverture complète de la porte est indiquée au cas où le commutateur d'ouverture est dans un état répondant et le capteur de mouvement est dans un état répondant de l'indication d'un mouvement de porte et/ou le capteur d'état est indicatif d'une ouverture complète.
